(19) **Europäisches Patentamt / European Patent Office / Office européen des brevets**

(11) **EP 4 571 639 B1**

(12) # EUROPEAN PATENT SPECIFICATION

(45) Date of publication and mention
of the grant of the patent:
**18.03.2026  Bulletin 2026/12**

(21) Application number: **24212903.9**

(22) Date of filing: **14.11.2024**

(51) International Patent Classification (IPC):
***G06T 7/00*** *(2017.01)*

(52) Cooperative Patent Classification (CPC):
**G06T 7/0004;** G06T 2207/20081;
G06T 2207/20084; G06T 2207/30108;
G06T 2207/30232

(54) **TRAINING METHOD FOR FAULT DETECTION MODEL, DEVICE FAULT DETECTION METHOD AND RELATED APPARATUS**

TRAININGSVERFAHREN FÜR EIN FEHLERERKENNUNGSMODELL, VORRICHTUNGSFEHLERERKENNUNGSVERFAHREN UND ZUGEHÖRIGE VORRICHTUNG

PROCÉDÉ D'APPRENTISSAGE POUR MODÈLE DE DÉTECTION DE DÉFAILLANCE, PROCÉDÉ DE DÉTECTION DE DÉFAILLANCE DE DISPOSITIF ET APPAREIL ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.12.2023  CN 202311706018**

(43) Date of publication of application:
**18.06.2025  Bulletin 2025/25**

(73) Proprietors:
 • **Zhejiang Hengyi Petrochemical Co., Ltd.**
   **Zhejiang 311200 (CN)**
 • **Suqian Yida New Material Co., Ltd.**
   **Suqian Jiangsu 223804 (CN)**

(72) Inventors:
 • **PENG, Xiantao**
   **Hangzhou, 311200 (CN)**
 • **WANG, Peng**
   **Hangzhou, 311200 (CN)**
 • **QIU, Yibo**
   **Hangzhou, 311200 (CN)**
 • **LIU, Mingyi**
   **Hangzhou, 311200 (CN)**
 • **WANG, Tieming**
   **Hangzhou, 311200 (CN)**
 • **REN, Chong**
   **Hangzhou, 311200 (CN)**

 • **LI, Dake**
   **Hangzhou, 311200 (CN)**
 • **XU, Feng**
   **Hangzhou, 311200 (CN)**

(74) Representative: **Lavoix**
   **Bayerstraße 83**
   **80335 München (DE)**

(56) References cited:
   **CN-A- 116 382 328     US-A1- 2021 319 201**

 • **CHEN GUANLIN ET AL: "Cross-Drone Transformer Network for Robust Single Object Tracking", IEEE TRANSACTIONS ON CIRCUITS AND SYSTEMS FOR VIDEO TECHNOLOGY, IEEE, USA, vol. 33, no. 9, 3 June 2023 (2023-06-03), pages 4552 - 4563, XP011948647, ISSN: 1051-8215, [retrieved on 20230605], DOI: 10.1109/ TCSVT.2023.3281557**
 • **LI HAORAN ET AL: "Drone Satellite Matching based on Multi-scale Local Pattern Network", PROCEEDINGS OF THE 3RD WORKSHOP ON FACIAL MICRO-EXPRESSION: ADVANCED TECHNIQUES FOR MULTI-MODAL FACIAL EXPRESSION ANALYSIS, ACMPUB27, NEW YORK, NY, USA, 2 November 2023 (2023-11-02), pages 51 - 55, XP059437790, ISBN: 979-8-4007-0296-9, DOI: 10.1145/ 3607834.3616575**

**Description**

TECHNICAL FIELD

The present disclosure relates to the field of computer technology, and in particular to fields of artificial intelligence, computer vision, image processing and other technologies.

BACKGROUND

In an industrial scenario of a spinning process, since there are too many devices in a spinning workshop, it is necessary to monitor devices in a spinning workshop in real time, in order to ensure the quality of chemical fiber products. The manual monitoring method is too wasteful of human resources, and manual detection cannot be performed in some areas. Therefore, it is a problem in the related art how to automatically monitor the spinning workshop.

SUMMARY

The present disclosure provides a training method for a fault detection model, a device fault detection method and related apparatuses, to solve or alleviate one or more technical problems in the related art.
In a first aspect, the present disclosure provides a training method for a fault detection model, including:

sampling a designated device based on a preset drone formation to obtain a sample sequence;
performing position encoding on the sample sequence according to the drone formation to obtain a drone formation encoding result;
inputting the sample sequence and the drone formation encoding result into a model to be trained to obtain a fault detection result output by the model to be trained;
determining a loss value based on the fault detection result and a true value of a fault detection result of the sample sequence; and
adjusting a model parameter of the model to be trained based on the loss value to obtain the fault detection model;
where the model to be trained includes an encoder and a decoder;
the encoder is configured to perform feature extraction on each sample image in the sample sequence to obtain a multi-scale feature of each sample image; perform feature fusion on features in a same scale of the sample sequence based on the drone formation encoding result to obtain a fused feature corresponding to each scale; and perform feature fusion on fused features in all scales to obtain a target feature; and
the decoder is configured to determine a fault detection result of the designated device based on the target feature, where the fault detection result includes a fault prediction type and a fault prediction box of a same fault position in a fault sample map; and splice sample images in the sample sequence with reference to the drone formation to obtain the fault sample map.

In a second aspect, the present disclosure provides a device fault detection method, applied to the fault detection model of the first aspect, including:

obtaining an initial image set of a target device based on a drone queue, where the drone queue is used to collect images of the target device from a plurality of perspectives to obtain the initial image set;
denoising each initial image in the initial image set to obtain a set of images to be detected;
performing position encoding on the drone queue to obtain a drone position encoding result; and
inputting the set of images to be detected and the drone position coding result into the fault detection model to obtain a fault detection result of the fault detection model for the target device;
where the fault detection result includes a fault prediction type and a fault prediction box of a same fault position in a target map; and the target map is obtained by splicing the images to be detected in the set of images to be detected with reference to the drone queue.

In a third aspect, the present disclosure provides a training apparatus for a fault detection model, including:

a sampling module configured to sample a designated device based on a preset drone formation to obtain a sample sequence;
a first encoding module configured to perform position encoding on the sample sequence according to the drone formation to obtain a drone formation encoding result;
an input module configured to input the sample sequence and the drone formation encoding result into a model to be trained to obtain a fault detection result output by the model to be trained;

a determining module configured to determine a loss value based on the fault detection result and a true value of a fault detection result of the sample sequence; and

an adjustment module configured to adjust a model parameter of the model to be trained based on the loss value to obtain the fault detection model;

where the model to be trained includes an encoder and a decoder;

the encoder is configured to perform feature extraction on each sample image in the sample sequence to obtain a multi-scale feature of each sample image; perform feature fusion on features in a same scale of the sample sequence based on the drone formation encoding result to obtain a fused feature corresponding to each scale; and perform feature fusion on fused features in all scales to obtain a target feature; and

the decoder is configured to determine a fault detection result of the designated device based on the target feature, where the fault detection result includes a fault prediction type and a fault prediction box of a same fault position in a fault sample map; and splice sample images in the sample sequence with reference to the drone formation to obtain the fault sample map.

In a fourth aspect, the present disclosure provides a device fault detection apparatus, applied to the fault detection model of the third aspect, including:

a collecting module configured to obtain an initial image set of a target device based on a drone queue, where the drone queue is used to collect images of the target device from a plurality of perspectives to obtain the initial image set;

a denoising module configured to denoise each initial image in the initial image set to obtain a set of images to be detected;

a second encoding module configured to perform position encoding on the drone queue to obtain a drone position encoding result; and

a processing module configured to input the set of images to be detected and the drone position coding result into the fault detection model to obtain a fault detection result of the fault detection model for the target device;

where the fault detection result includes a fault prediction type and a fault prediction box of a same fault position in a target map; and the target map is obtained by splicing the images to be detected in the set of images to be detected with reference to the drone queue.

In a fifth aspect, provided is an electronic device, including:

at least one processor; and

a memory connected in communication with the at least one processor;

where the memory stores an instruction executable by the at least one processor, and the instruction, when executed by the at least one processor, enables the at least one processor to execute the method of any embodiment of the present disclosure.

In a sixth aspect, provided is a non-transitory computer-readable storage medium storing a computer instruction thereon, and the computer instruction is used to cause a computer to execute the method according to any one of the embodiments of the present disclosure.

In a seventh aspect, provided is a computer program product including a computer program, and the computer program implements the method according to any one of the embodiments of the present disclosure, when executed by a processor.

In the embodiments of the present disclosure, the drone formation is used to perform all-round imaging for the same device, and the model to be trained is guided to learn a correlation between different images based on the position coding of the drones, to improve the fault detection efficiency of the model.

It should be understood that the content described in this part is not intended to identify critical or essential features of embodiments of the present disclosure, nor is it used to limit the scope of the present disclosure. Other features of the present disclosure will be easily understood through the following description.

BRIEF DESCRIPTION OF THE DRAWINGS

In the accompanying drawings, the same reference numbers represent the same or similar parts or elements throughout the accompanying drawings, unless otherwise specified. These accompanying drawings are not necessarily drawn to scale. It should be understood that these accompanying drawings only depict some embodiments provided according to the present disclosure, and should not be considered as limiting the scope of the present disclosure.

FIG. 1 is a schematic flow chart of a training method for a fault detection model according to an embodiment of the present disclosure;

FIG. 2 is a schematic diagram of a spinning workshop according to an embodiment of the present disclosure;

FIG. 3 is a schematic diagram of a model to be trained according to an embodiment of the present disclosure;

FIG. 4 is a schematic diagram of an everything segmentation model according to an embodiment of the present disclosure;

FIG. 5 is a schematic flow chart of a device fault detection method according to an embodiment of the present disclosure;

FIG. 6 is a structural schematic diagram of a training apparatus for a fault detection model according to an embodiment of the present disclosure;

FIG. 7 is a structural schematic diagram of a device fault detection apparatus according to an embodiment of the present disclosure; and

FIG. 8 is a block diagram of an electronic device used to implement the training method for the fault detection model or the device fault detection method according to an embodiment of the present disclosure.

DETAILED DESCRIPTION

The present disclosure will be described below in detail with reference to the accompanying drawings. The same reference numbers in accompanying drawings represent elements with identical or similar functions. Although various aspects of the embodiments are shown in the accompanying drawings, the accompanying drawings are not necessarily drawn to scale unless specifically indicated.

In addition, in order to better illustrate the present disclosure, numerous specific details are given in the following specific implementations. Those having ordinary skill in the art should understand that the present disclosure may be performed without certain specific details. In some examples, methods, means, elements and circuits well known to those having ordinary skill in the art are not described in detail, in order to highlight the subject matter of the present disclosure.

Moreover, the terms "first" and "second" are only for the purpose of description, and cannot be construed to indicate or imply the relative importance or implicitly point out the quantity of technical features indicated. Therefore, the feature defined with "first" or "second" may explicitly or implicitly include one or more features. In the description of the present disclosure, "a plurality of" means two or more than two, unless otherwise expressly and specifically defined.

In an industrial scenario of the spinning process, since there are too many devices in a spinning workshop, it is necessary to monitor the devices in the spinning workshop, in order to ensure normal production of chemical fiber products.

The area of the spinning plant is relatively large, the process flow is long, and many types of devices are used in each process flow. Some devices are too large to be detected manually. Therefore, for the situations of a large detection area, many types of devices and a relatively complex detection environment, an automated detection technology is needed to improve the efficiency of fault detection.

It should be noted that main types of spinning products involved in the solution of embodiments of the present disclosure may include one or more of partially oriented yarns (POY), fully drawn yarns (FDY), draw textured yarns (DTY) (or called low-elastic yarns), etc. For example, types of yarns may specifically include polyester partially oriented yarns, polyester fully drawn yarns, polyester drawn yarns, polyester draw textured yarns, etc.

In order to automatically and accurately detect relevant devices in the spinning plant, an embodiment of the present disclosure provides a fault detection model, to be expected to collect images by controlling a drone queue, and the fault detection model completes fault detection.

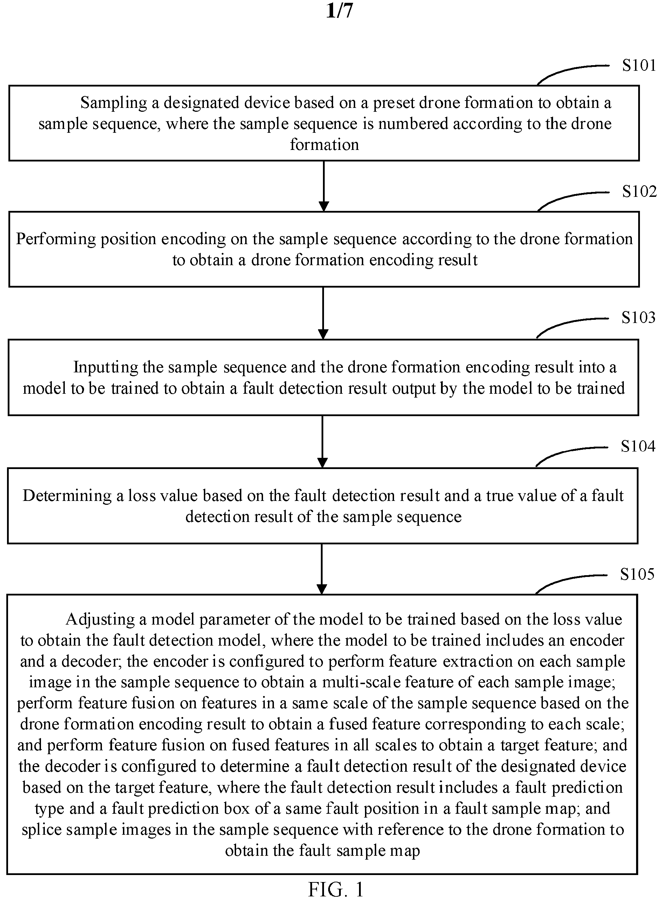

Firstly, an embodiment of the present disclosure proposes a training method for a fault detection model, to be expected to train a satisfactory model with detection effect using this method. As shown in FIG. 1, the method includes the following steps:

S101: a designated device is sampled based on a preset drone formation to obtain a sample sequence.

The sample sequence is numbered according to the drone formation.

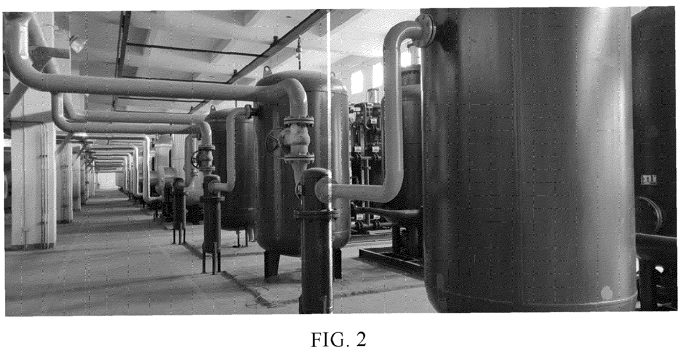

Here, the designated device may be any device in a spinning workshop, and the spinning workshop may be as shown in FIG. 2. The designated device may be a pipeline, a flange, a gas storage tank, a liquid storage tank, etc.

Many devices in a spinning plant need to be observed from multiple angles. Therefore, the drone queue is used to collect images around a device to obtain the overall situation of the device at the same time in the embodiment of the present disclosure. For example, a plurality of drones may be deployed in a drone formation based on the structure of the designated device, to simultaneously image the designated device at multiple angles. The drone formation is drone 1, drone 2, ..., and drone n; the image taken by drone 1 is image 1, the image taken by drone 2 is image 2, ..., and the image taken by drone n is image n. The sample sequence is {image 1; image 2; ...; image n}.

S102: position encoding is performed on the sample sequence according to the drone formation to obtain a drone formation encoding result.

The relative position information of each drone is obtained, so that position encoding may be performed on the entire drone formation to obtain the drone formation encoding result.

Position encoding is performed on the drone formation because sample images collected by each drone can be regarded as part of images in the three-dimensional imaging of the designated device. The fault of the designated device may vary at different angles, so there is a dependency between image contents of a plurality of sample images in the same sample sequence. Therefore, the model to be trained can be guided to learn relevant knowledge from the sample sequence based on the dependency through the position encoding of the drone formation, so as to facilitate fault detection.

S103: the sample sequence and the drone formation encoding result are input into a model to be trained to obtain a fault detection result output by the model to be trained.

S104: a loss value are determined based on the fault detection result and a true value of a fault detection result of the sample sequence.

S105: a model parameter of the model to be trained is adjusted based on the loss value to obtain the fault detection model.

Here, the model to be trained includes an encoder and a decoder.

The encoder is configured to perform feature extraction on each sample image in the sample sequence to obtain a multi-scale feature of each sample image; perform feature fusion on features in a same scale of the sample sequence based on the drone formation encoding result to obtain a fused feature corresponding to each scale; and perform feature fusion on fused features in all scales to obtain a target feature.

The decoder is configured to determine a fault detection result of the designated device based on the target feature, where the fault detection result includes a fault prediction type and a fault prediction box of a same fault position in a fault sample map; and splice sample images in the sample sequence with reference to the drone formation to obtain the fault sample map.

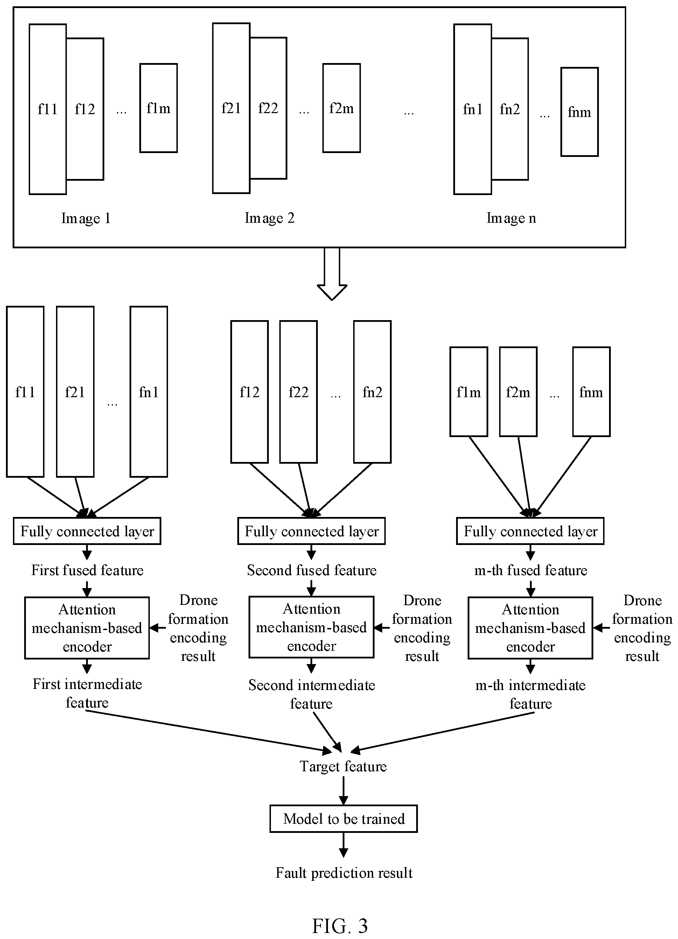

Here, the schematic diagram of inputting the sample sequence and the drone formation encoding result into the model to be trained is shown in FIG. 3. The feature extraction model is used to perform feature extraction on each image in the sample sequence to obtain features in different scales for each image. As shown in FIG. 3, each rectangular box in the same shape represents an image feature in a scale. The image 1 corresponds to feature $f11$ in a first scale, feature $f12$ in a second scale, ..., and feature $f1m$ in an m-th scale; the image 2 corresponds to feature $f21$ in a first scale, feature $f22$ in a second scale, ..., and feature $f2m$ in an m-th scale; and the image n corresponds to feature $fn1$ in a first scale, feature $fn2$ in a second scale, ..., and feature $fnm$ in an m-th scale. The image features of each image belonging to the first scale are input into a fully connected layer for fusion to obtain a first fused feature, and the drone formation encoding result and the first fused feature are simultaneously input into an attention mechanism-based encoder to obtain a first intermediate feature. The image features of each image belonging to the second scale are input into the fully connected layer for fusion to obtain the second fused feature, and the drone formation encoding result and the second fused feature are simultaneously input into the attention mechanism-based encoder to obtain a second intermediate feature. Based on the existence of image features in m scales, m intermediate features are obtained. The m intermediate features may be fused based on a pyramid model to obtain the target feature. At this point, the encoder completes the encoding operation. The target feature is input into the decoder of the model to be trained, to obtain a fault detection result output by the model to be trained. A loss value is determined based on the fault detection result and the true value of the fault detection result of the sample sequence. The model parameter of the model to be trained is adjusted based on the loss value, and the fault detection model is obtained when the loss value meets a convergence condition. The fault detection result includes the fault prediction type and the fault prediction box of the same fault position in the fault sample map. In the case of multiple fault positions, a fault prediction type and a fault prediction box may be detected for each fault position.

In an embodiment of the present disclosure, the image features of the sample sequence collected based on the drone queue are fused to obtain the target feature, and the target feature may describe features of the same fault from multiple angles, facilitating a comprehensive description of the fault situation, so that the model to be trained may accurately perform the fault detection. Moreover, the target feature may contain important features at different levels by extracting and fusing multi-scale features of sample images at different angles, thereby improving the efficiency of the model in fault identification.

In an embodiment of the present disclosure, in order to obtain a high-quality labeling result, the true value of the fault detection result of the sample sequence may be determined based on the following method:

Step A1: the sample sequence is spliced into the fault sample map according to the drone formation, where the fault sample map describes a state of the designated device from a plurality of drone perspectives.

Step A2: first prompt information is constructed based on the fault sample map, where the first prompt information includes a fault point of at least one fault in the fault sample map, and position information of detection boxes of a same fault in different drone perspectives in the fault sample map is used as sub-position parameters.

Step A3: position encoding is performed on the sub-position parameters of the same fault to obtain a fault position code of the same fault.

For each fault, the following operations are performed:

Step A31: a fault point of the fault and a fault position code of the fault as second prompt information are input into an everything segmentation model, so that the everything segmentation model segments out a fault mask map of the fault from the fault sample map.

Step A32: a true class label of the fault mask map of the fault is obtained, and a detection box label of the fault is constructed based on position information of the fault mask map in the fault sample map, to obtain the true value of the fault detection result.

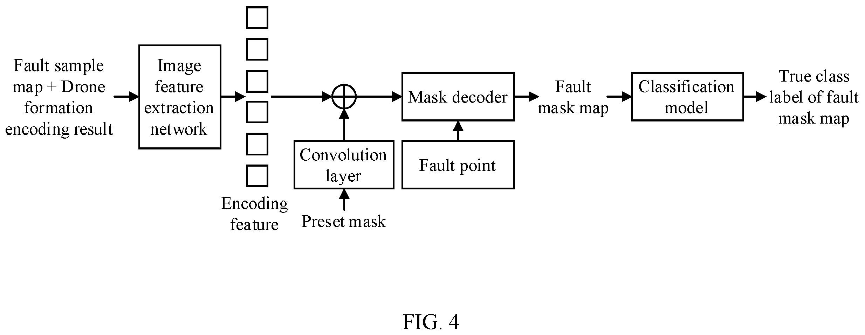

The schematic diagram of inputting the fault sample map into the everything segmentation model may be shown in FIG. 4. The fault sample map and the drone formation encoding result in the second prompt information are input into an image feature extraction network (this network is built based on the attention mechanism) to obtain an encoding feature. The preset mask is convolved using at least one convolution layer to obtain a mask feature. Here, the preset mask may be a mask obtained by performing object segmentation on the fault position based on other pre-trained segmentation networks. The mask feature and the encoding feature are fused and then input into a mask decoder. At the same time, the fault point in the second prompt information is also input into the mask decoder. After being processed by the mask decoder, the fault mask map that enables the everything segmentation model to segment out the fault from the fault sample map may be obtained. The fault mask map is input into a classification model to obtain a confidence score of the fault mask map for each preset category, the preset category with the highest score is used as the true class label of the fault mask map, a rectangular box surrounding the fault point is constructed based on the position information of the fault mask map in the fault sample map, and the rectangular box is determined as the detection box label of the fault.

For example, when the designated device includes three fault positions, images of the fault positions may be collected from multiple perspectives, the same fault position may include a plurality of detection boxes, and each detection box has a corresponding category. For example, the fault position A includes a detection box 1 from the perspective of drone 1, whose fault code is a; and further includes a detection box 2 from the perspective of drone 2, whose fault code is also a.

In the embodiment of the present disclosure, the fault sample map is segmented based on the everything segmentation model, so that the everything segmentation model segments out the fault mask map of the fault from the fault sample map, then the true class label of the fault mask map may be obtained, and then the detection box label of the fault is constructed based on the position information of the fault mask map in the fault sample map, laying a strong foundation for training the model to be trained.

In some embodiments, in order to optimize the parameter of the fault detection model and improve the fault detection efficiency, the loss function in the embodiment of the present disclosure includes the following loss items:

1) Position loss between the fault prediction box and the detection box label.

In some embodiments, the position loss may be measured from multiple perspectives. For example, the detection box itself is a fault position obtained by the regression task. During the model training phase, the detection box predicted for the same fault position will become more and more accurate as the model parameter is optimized.

In an embodiment of the present disclosure, the position loss may include a first position loss sub-item, a second position loss sub-item, a third position loss sub-item, a fourth position loss sub-item, and a fifth position loss sub-item. The specific calculation method of each loss sub-item is as follows:

The first position loss sub-item is used to represent loss between fault prediction boxes of the same fault position in a plurality of sample images in the sample sequence and center points of corresponding detection box labels.

$$f_1 = \eta_c \sum_{i=0}^{S} \sum_{j=0}^{B} l_{ij}^{obj} (2 - w_i \times h_i)[(x_i - \hat{x}_i^j)^2 + (y_i - \hat{y}_i^j)^2] \quad (1)$$

where, $f_1$ represents the first position loss sub-item, $\hat{x}_i^j$ and $\hat{y}_i^j$ represent center coordinates of the fault prediction box, $x_i$ and $y_i$ represent the center coordinates of the detection box label in the true value of the fault detection result, and $l_{ij}^{obj}$ represents whether the j-th candidate box of the i-th sample image predicts the fault position. If so, $l_{ij}^{obj}$ is 1; if not, $l_{ij}^{obj}$ is 0. $w_i$ and $h_i$ represent the width and height of the fault prediction box. $\eta_c$ is the compensation coefficient. The sizes of the widths and heights of the fault prediction box and the detection box label are normalized, so the value range of $w_i$ and $h_i$ is [0, 1]. B represents the total quantity of candidate boxes in the i-th sample image; and S represents the total quantity of sample images.

The second position loss sub-item is used to represent detection box width loss between the fault prediction boxes of the same fault position in the plurality of sample images and the corresponding detection box labels, and detection box height loss between the fault prediction boxes of the same fault position in the plurality of sample images and the corresponding detection box labels.

$$f_2 = \eta_c \sum_{i=0}^{S} \sum_{j=0}^{B} I_{ij}^{obj} \left( 2 - w_i \times h_i \right) [(w_i - \widehat{w}_i^j)^2 + (h_i - \widehat{h}_i^j)^2] \quad (2)$$

where, $f_2$ represents the second position loss sub-item, $w_i$ and $h_i$ represent the width and height of the fault prediction box, $\widehat{w}_i^j$ and $\widehat{h}_i^j$ represent the width and height of the corresponding detection box label in the true value of the fault detection result, and $I_{ij}^{obj}$ represents whether the j-th candidate box of the i-th sample image contains the fault position. If so, $I_{ij}^{obj}$ is 1; if not, $I_{ij}^{obj}$ is 0. $\eta_c$ is the compensation coefficient. The difference between the width and height of the detection box label and the fault prediction box and the sizes of the detection box label and the fault prediction box are normalized, so the value range of $w_i$, $h_i$, $\widehat{w}_i^j$ and $\widehat{h}_i^j$ is [0, 1]. B represents the total quantity of candidate boxes in the i-th sample image; and S represents the total quantity of sample images.

The third position loss sub-item is used to represent confidence loss of the fault prediction boxes of the same fault position in the plurality of sample images.

$$f_3 = \sum_{i=0}^{S} \sum_{j=0}^{B} I_{ij}^{obj} [\widehat{C}_i^j \log (C_i^j) + (1 - \widehat{C}_i^j) \log (1 - C_i^j]] \quad (3)$$

where, $f_3$ represents the third position loss sub-item. $\widehat{C}_i^j$ represents the confidence of the fault prediction box. If the j-th detection box of the i-th sample image is responsible for detecting the fault position, then $\widehat{C}_i^j = 1$; otherwise $\widehat{C}_i^j = 0$. $C_i^j$ represents the confidence of the detection box label. $I_{ij}^{obj}$ represents whether the j-th candidate box of the i-th sample object contains the fault position. If so, $I_{ij}^{obj}$ is 1; if not, $I_{ij}^{obj}$ is 0. B represents the total quantity of candidate boxes in the i-th sample image; and S represents the total quantity of sample images.

The fourth position loss sub-item is used to represent overlap rate loss between important fault prediction boxes of the same fault position in the plurality of sample images and detection boxes of important positions in corresponding detection box labels.

$$f_4 = \sum_{i=0}^{S} \sum_{j=0}^{B} I_{ij}^{obj} [\widehat{O}_i^j + \log (1 - \widehat{O}_i^j)] \quad (4)$$

where, $f_4$ represents the fourth position loss sub-item. $I_{ij}^{obj}$ represents whether the j-th candidate box of the i-th sample image contains the fault position. If so, $I_{ij}^{obj}$ is 1; if not, $I_{ij}^{obj}$ is 0. $\widehat{O}_i^j$ represents the overlap rate between the fault prediction box and the detection box at the important position in the corresponding detection box label. B represents the total quantity of candidate boxes in the i-th sample image; and S represents the total quantity of sample images.

The fifth position loss sub-item is used to represent quantity loss between the total quantity of fault prediction boxes of the same fault position in the plurality of sample images and the total quantity of detection boxes in the corresponding detection box labels.

$$f_5 = \sum_{i=0}^{S} \sum_{j=0}^{B} I_{ij}^{obj} [log(N_i - \widehat{N}_i^j)^2] \quad (5)$$

where, $f_5$ represents the fifth position loss sub-item. $I_{ij}^{obj}$ represents whether the j-th candidate box of the i-th sample image contains the fault position. If so, $I_{ij}^{obj}$ is 1; if not, $I_{ij}^{obj}$ is 0. $N_i$ represents the total quantity of fault prediction boxes; and $\widehat{N}_i^j$ represents the total quantity of detection boxes in the detection box label. B represents the total quantity of candidate boxes in the i-th sample image; and S represents the total quantity of sample images.

During implementation, due to the detection error of the fault detection model, there may be undetected detection boxes or misdetected detection boxes, and all of these detection boxes participate in calculation.

During implementation, important and unimportant labels may be marked in the detection box labels. Unimportant detection boxes may not participate in the loss calculation even through they are detected, while detected detection boxes at important positions participate in the loss calculation.

In the embodiments of the present disclosure, the loss value of the fault prediction box is comprehensively measured based on the center point, width, height and other information of the detection box to improve the accuracy of the fault detection model.

2) Classification loss between the fault prediction type and the true class label.

In some embodiments, the classification loss is determined based on the following formula:

$$l_{cls} = -\frac{1}{N} \sum_i^N log \left( \frac{e^{f(a_i, b_i)/\rho_\tau}}{\sum_{h'} e^{f(a_i, b')/\rho_\tau}} \right) \qquad (6)$$

where, N is the quantity of fault positions in the fault sample map, and a same fault position is counted once in N when there are a plurality of sample images describing the same fault position in the fault sample map;

$a_i$ is an i-th fault position;
$f(a_i, b_i)$ is a true class label of the i-th fault position;
$f(a_i, b')$ is statistic of a prediction score of each sample image for the i-th fault position when the i-th fault position appears in a plurality of sample images of the fault sample map; and
$\rho_\tau$ is a temperature scalar.

Here, due to the adjustment of the model parameter, the prediction of the detection box of the same fault position will change with the optimization of the model. Therefore, the accumulation symbol in expression (6) may be understood as the accumulation of the position prediction results of the same detection box label in multiple rounds of prediction. The amount accumulated each time may be determined as needed.

Here, the statistic is a mean value, a mode or a maximum value. During implementation, since one fault position is included in a plurality of images, there are a plurality of detection boxes, and each detection box has a prediction score. The prediction scores of the plurality of detection boxes need to be integrated. The mean value of the prediction scores of the plurality of detection boxes may be selected as the prediction score, or the mode or the maximum value may be selected as the prediction score.

On the basis of obtaining the above-mentioned position loss and classification loss, the loss function constructed is shown in formula (7):

$$F = \lambda_1 f_1 + \lambda_2 f_2 + \lambda_3 f_3 + \lambda_4 f_4 + \lambda_5 f_5 + \lambda_6 l_{cls} \qquad (7)$$

where, $F$ represents the loss function, $\lambda_1, \lambda_2, \lambda_3, \lambda_4, \lambda_5$ and $\lambda_6$ represent weights of the corresponding loss sub-items, and the meanings of $f_1, f_2, f_3, f_4, f_5$ and $l_{cls}$ are similar to those mentioned above and will not be described one by one in the embodiments of the present disclosure.

In some embodiments, each sample sequence is a training sample, and a plurality of sample sequences constitute a sample set. A part of the sample set may be taken as first training data, and another part thereof may be taken as second training data. The first training data is used to adjust learnable parameters in the model to be trained, and the second training data is used to adjust hyper-parameters in the model to be trained.

In an embodiment of the present disclosure, the hyper-parameters that need to be learned may include $\lambda_1, \lambda_2, \lambda_3, \lambda_4, \lambda_5, \lambda_6$ and $\rho_\tau$. The learnable parameters are model parameters other than the hyper-parameters in the loss function.

The model to be trained of FIG. 1 in the embodiment of the present disclosure may be a model in which the hyper-parameters have been learned. The process of learning the hyper-parameters may include:

The first training data is input into the model to be trained to obtain a fault detection result. The fault detection result includes a fault prediction type and a fault prediction box. The first loss (including position loss and classification loss) is calculated based on the difference between the fault detection result and the true value, the gradient is calculated based on the first loss, and then the learnable parameters in the model to be trained are optimized based on the gradient direction. On the basis of the model expressed by the learnable parameters after this round of adjustment, the second training data is input into the model to be trained to obtain a fault detection result. The fault detection result includes a fault prediction type and a fault prediction box. The position loss is calculated based on the difference between the fault prediction box and the detection box label, and the classification loss is calculated. Then the second loss is determined based on the position loss and the classification loss. The hyper-parameters are optimized with the goal of minimizing the second loss. Then, the learnable parameters in the model to be trained are adjusted again based on the first training data, and the cycle is iterated in sequence until the optimal hyper-parameters that minimize the second loss are obtained. At this point, the hyper-parameters are determined, and then the method shown in FIG. 1 is used to continue optimizing the learnable parameters of the model. That is, the sample sequence is input into the model to be trained to obtain a fault detection result. The fault detection result includes a fault prediction type and a fault prediction box. The learnable parameters of the position loss in the loss function are adjusted based on the difference between the fault prediction box and the detection box, and the learnable parameters of the classification loss in the loss function are adjusted based on the difference between the fault prediction type and the true class label. When the convergence condition is met, the fault detection model is obtained.

In the embodiment of the present disclosure, the position loss and classification loss are comprehensively considered, and thus the objective function designed may provide a strong basis for training the model to be trained.

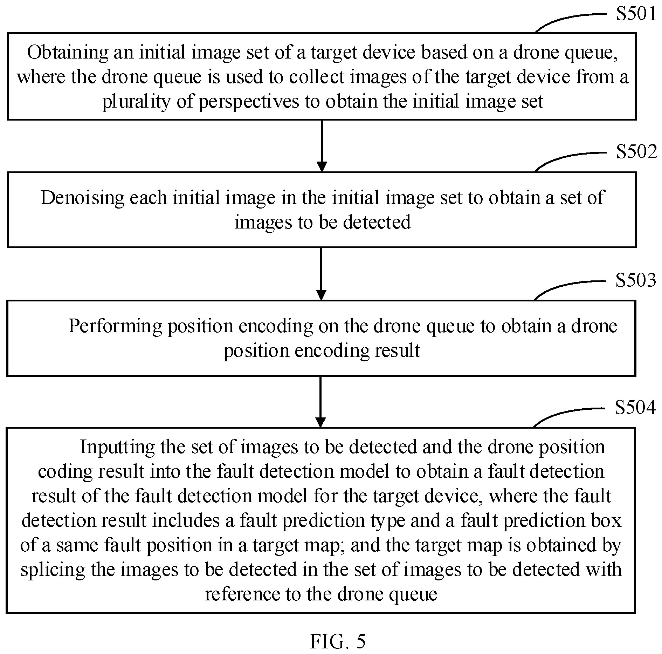

Based on the fault detection model obtained above and based on the same technical concept, an embodiment of the present disclosure further includes a device fault detection method, as shown in FIG. 5, including:

S501: an initial image set of a target device is obtained based on a drone queue, where the drone queue is used to collect images of the target device from a plurality of perspectives to obtain the initial image set.

S502: each initial image in the initial image set is denoised to obtain a set of images to be detected.

During implementation, for each initial image, a target blur kernel may be obtained based on the trajectory of the drone collecting the initial image, and the initial image is denoised based on the target blur kernel, to obtain the set of images to be detected constructed from the denoised initial images.

Taking an initial image for example, firstly k key points need to be obtained from the initial image, and an initial blur kernel is obtained based on the k key points.

S503: position encoding is performed on the drone queue to obtain a drone position encoding result.

S504: the set of images to be detected and the drone position coding result are input into the fault detection model to obtain a fault detection result of the fault detection model for the target device.

Here, the fault detection result includes a fault prediction type and a fault prediction box of a same fault position in a target map; and the target map is obtained by splicing the images to be detected in the set of images to be detected with reference to the drone queue.

In the embodiment of the present disclosure, the initial image set collected based on the drone queue is denoised to obtain the set of images to be detected, and the set of images to be detected may describe the features of the same fault from multiple angles, facilitating a comprehensive description of the fault situation, so that the fault detection result may accurately perform the fault detection. Based on this method, the target device may be automatically monitored to save human resources.

In some embodiments, in order to reduce misdetection of prediction boxes, the method may also be implemented as follows:

Step B1: at least one key prediction box is screened out from a plurality of fault prediction boxes of the same fault position.

The fault prediction boxes may be labeled with critical and non-critical labels. The non-critical detection boxes detected do not participate in the loss calculation, while the detected detection boxes at critical positions participate in the loss calculation.

Step B2: an image to be detected of each key prediction box is separated out from the target map based on the at least one key prediction box.

Step B3: a three-dimensional effect graph of the same position is constructed and output based on the image to be detected of each key prediction box.

When an anomaly of an important fault prediction box is detected, a three-dimensional effect graph of this position is constructed based on position encoding of the queue collected by the drone and output to the staff to implement staff management.

In the embodiments of the present disclosure, at least one key prediction box is screened out from the plurality of fault prediction boxes of the same fault position, the key detection box is used for fault prediction to reduce consumption of computing resources, and the position at which the fault is detected is rendered so that the staff may process the fault in time.

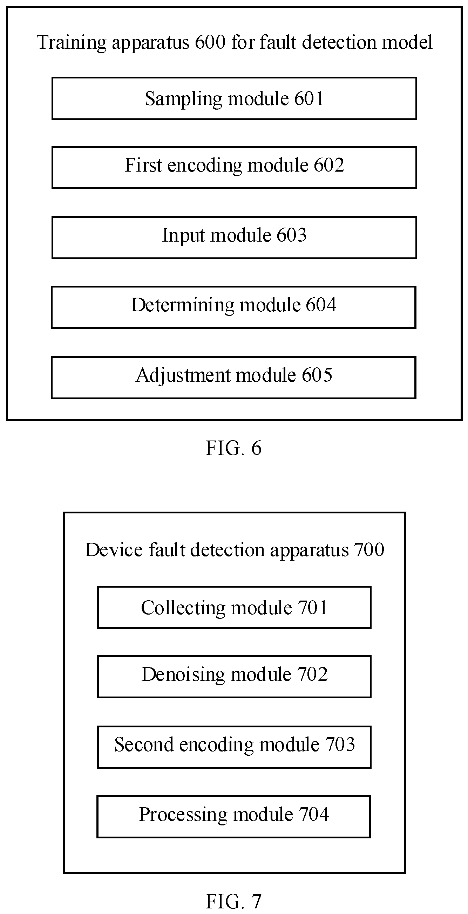

Based on the same technical concept, an embodiment of the present disclosure proposes a training apparatus 600 for a fault detection model, as shown in FIG. 6, including:

a sampling module 601 configured to sample a designated device based on a preset drone formation to obtain a sample sequence;

a first encoding module 602 configured to perform position encoding on the sample sequence according to the drone formation to obtain a drone formation encoding result;

an input module 603 configured to input the sample sequence and the drone formation encoding result into a model to be trained to obtain a fault detection result output by the model to be trained;

a determining module 604 configured to determine a loss value based on the fault detection result and a true value of a fault detection result of the sample sequence; and

an adjustment module 605 configured to adjust a model parameter of the model to be trained based on the loss value to obtain the fault detection model;

where the model to be trained includes an encoder and a decoder;

the encoder is configured to perform feature extraction on each sample image in the sample sequence to obtain a multi-scale feature of each sample image; perform feature fusion on features in a same scale of the sample sequence based on the drone formation encoding result to obtain a fused feature corresponding to each scale; and perform feature fusion on fused features in all scales to obtain a target feature; and

the decoder is configured to determine a fault detection result of the designated device based on the target feature, where the fault detection result includes a fault prediction type and a fault prediction box of a same fault position in a fault sample map; and splice sample images in the sample sequence with reference to the drone formation to obtain the fault sample map.

In some embodiments, the apparatus further includes an obtaining module configured to:

splice the sample sequence into the fault sample map according to the drone formation, where the fault sample map describes a state of the designated device from a plurality of drone perspectives;

construct first prompt information based on the fault sample map, where the first prompt information includes a fault point of at least one fault in the fault sample map, and position information of detection boxes of a same fault in different drone perspectives in the fault sample map is used as sub-position parameters;

perform position encoding on the sub-position parameters of the same fault to obtain a fault position code of the same fault; and

for each fault, perform following operations:

inputting a fault point of the fault and a fault position code of the fault as second prompt information into an everything segmentation model, so that the everything segmentation model segments out a fault mask map of the fault from the fault sample map; and

obtaining a true class label of the fault mask map of the fault, and construct a detection box label of the fault based on position information of the fault mask map in the fault sample map, to obtain the true value of the fault detection result.

In some embodiments, a loss function of the model to be trained includes following loss items:

position loss between the fault prediction box and detection box label; and
classification loss between the fault prediction type and true class label.

In some embodiments, the determining module is configured to determine the classification loss based on a following formula:

$$l_{cls} = -\frac{1}{N} \sum_i^N log \left( \frac{e^{f(a_i, b_i)/\rho_\tau}}{\sum_{b'} e^{f(a_i, b')/\rho_\tau}} \right)$$

where N is the quantity of fault positions in the fault sample map, and a same fault position is counted once in N when there are a plurality of sample images describing the same fault position in the fault sample map;

$a_i$ is an i-th fault position;

$f(a_i, b_i)$ is a true class label of the i-th fault position;

$f(a_i, b')$ is statistic of a prediction score of each sample image for the i-th fault position when the i-th fault position appears in a plurality of sample images of the fault sample map; and

$\rho_\tau$ is a temperature scalar.

In some embodiments, the statistic is a mean value, a mode or a maximum value.

In some embodiments, the position loss includes:

a first position loss sub-item, used to represent loss between fault prediction boxes of the same fault position in a plurality of sample images in the sample sequence and center points of corresponding detection box labels;

a second position loss sub-item, used to represent detection box width loss between the fault prediction boxes of the same fault position in the plurality of sample images and the corresponding detection box labels, and detection box height loss between the fault prediction boxes of the same fault position in the plurality of sample images and the corresponding detection box labels;

a third position loss sub-item, used to represent confidence loss of the fault prediction boxes of the same fault position in the plurality of sample images;

a fourth position loss sub-item, used to represent overlap rate loss between important fault prediction boxes of the same fault position in the plurality of sample images and detection boxes of important positions in corresponding detection box labels; and

a fifth position loss sub-item, used to represent quantity loss between the total quantity of fault prediction boxes of the same fault position in the plurality of sample images and the total quantity of detection boxes in the corresponding detection box labels.

Based on the same technical concept, an embodiment of the present disclosure proposes a device fault detection apparatus 700, applied to the fault detection model obtained in the above embodiments, as shown in FIG. 7, including:

a collecting module 701 configured to obtain an initial image set of a target device based on a drone queue, where the drone queue is used to collect images of the target device from a plurality of perspectives to obtain the initial image set;

a denoising module 702 configured to denoise each initial image in the initial image set to obtain a set of images to be detected;

a second encoding module 703 configured to perform position encoding on the drone queue to obtain a drone position encoding result; and

a processing module 704 configured to input the set of images to be detected and the drone position coding result into the fault detection model to obtain a fault detection result of the fault detection model for the target device;

where the fault detection result includes a fault prediction type and a fault prediction box of a same fault position in a target map; and the target map is obtained by splicing the images to be detected in the set of images to be detected with reference to the drone queue.

In some embodiments, the apparatus further includes a generating module configured to:

screen out at least one key prediction box from a plurality of fault prediction boxes of the same fault position;

separate out an image to be detected of each key prediction box from the target map based on the at least one key prediction box; and

construct and output a three-dimensional effect graph of the same fault position based on the image to be detected of each key prediction box.

For the description of specific functions and examples of the modules and sub-modules\units of the apparatus of the embodiment of the present disclosure, reference may be made to the relevant description of the corresponding steps in the above-mentioned method embodiments, which are not repeated here.

In the technical solution of the present disclosure, acquisition, storage and application of the user's personal information involved are in compliance with relevant laws and regulations, and do not violate public order and good customs.

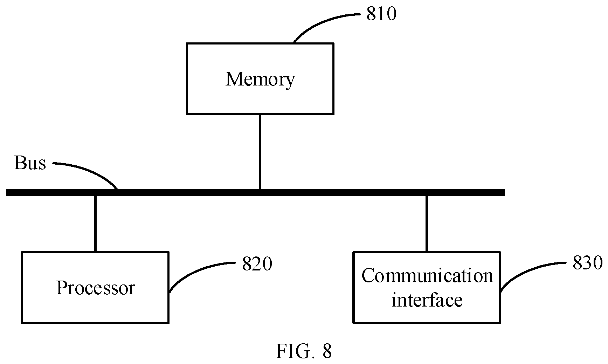

FIG. 8 is a structural block diagram of an electronic device according to an embodiment of the present disclosure. As shown in FIG. 8, the electronic device includes: a memory 810 and a processor 820, and the memory 810 stores a computer program that can run on the processor 820. There may be one or more memories 810 and processors 820. The memory 810 may store one or more computer programs, and the one or more computer programs cause the electronic device to perform the method provided in the above method embodiment, when executed by the electronic device. The electronic device may also include: a communication interface 830 configured to communicate with an external device for data interactive transmission.

If the memory 810, the processor 820 and the communication interface 830 are implemented independently, the memory 810, the processor 820 and the communication interface 830 may be connected to each other and complete communication with each other via a bus. The bus may be an industry standard architecture (ISA) bus, a peripheral component interconnect (PCI) bus, or an extended industry standard architecture (EISA) bus, etc. The bus may be divided into address bus, data bus, control bus, etc. For ease of representation, the bus is represented by only one thick line in FIG.

8, but this thick line does not represent only one bus or only one type of bus.

Optionally, in a specific implementation, if the memory 810, the processor 820 and the communication interface 830 are integrated on one chip, the memory 810, the processor 820 and the communication interface 830 may communicate with each other via an internal interface.

It should be understood that the above-mentioned processor may be a central processing unit (CPU) or other general-purpose processor, a digital signal processor (DSP), an application specific integrated circuit (ASIC), a field programmable gate array (FPGA) or other programmable logic device, a discrete gate or transistor logic device, a discrete hardware component, etc. The general-purpose processor may be a microprocessor or any conventional processor, etc. It is worth noting that the processor may be a processor that supports an advanced RISC machines (ARM) architecture.

Further, optionally, the above-mentioned memory may include a read-only memory and a random access memory, and may also include a non-volatile random access memory. The memory may be a volatile memory or a non-volatile memory, or may include both a volatile memory and a non-volatile memory. Here, the non-volatile memory may include a read-only memory (ROM), a programmable ROM (PROM), an erasable prom (EPROM), an electrically EPROM (EEPROM) or a flash memory. The volatile memory may include a random access memory (RAM), which acts as an external cache. By way of illustration and not limitation, many forms of RAMs are available, for example, a static RAM (SRAM), a dynamic random access memory (DRAM), a synchronous DRAM (SDRAM), a double data rate SDRAM (DDR SDRAM), an enhanced SDRAM (ESDRAM), a synchlink DRAM (SLDRAM) and a direct RAMBUS RAM (DR RAM).

The above embodiments may be implemented in whole or in part by software, hardware, firmware or any combination thereof. When implemented by software, they may be implemented in the form of a computer program product in whole or in part. The computer program product includes one or more computer instructions. When the computer instructions are loaded and executed on a computer, the processes or functions described in the embodiments of the present disclosure are generated in whole or in part. The computer may be a general-purpose computer, a special-purpose computer, a computer network, or other programmable device. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, digital subscriber line (DSL)) or wireless (e.g., infrared, Bluetooth, microwave, etc.) way. The computer readable storage medium may be any available medium that can be accessed by a computer, or a data storage device such as server or data center that is integrated with one or more available media. The available media may be magnetic media (for example, floppy disk, hard disk, magnetic tape), optical media (for example, digital versatile disc (DVD)), or semiconductor media (for example, Solid State Disk (SSD)), etc. It is worth noting that the computer readable storage medium mentioned in the present disclosure may be a non-volatile storage medium, in other words, may be a non-transitory storage medium.

Those having ordinary skill in the art can understand that all or some of the steps for implementing the above embodiments may be completed by hardware, or may be completed by instructing related hardware through a program. The program may be stored in a computer readable storage medium. The above-mentioned storage medium may be a read-only memory, a magnetic disk or an optical disk, etc.

In the description of the embodiments of the present disclosure, the description with reference to the terms "one embodiment", "some embodiments", "example", "specific example" or "some examples", etc. means that specific features, structures, materials or characteristics described in conjunction with the embodiment or example are included in at least one embodiment or example of the present disclosure. Moreover, the specific features, structures, materials or characteristics described may be combined in a suitable manner in any one or more embodiments or examples. In addition, those skilled in the art can integrate and combine different embodiments or examples and features of different embodiments or examples described in this specification without conflicting with each other.

In the description of the embodiments of the present disclosure, "/" represents or, unless otherwise specified. For example, A/B may represent A or B. The term "and/or" herein only describes an association relation of associated objects, which indicates that there may be three kinds of relations, for example, A and/or B may indicate that only A exists, or both A and B exist, or only B exists.

In the description of the embodiments of the present disclosure, the terms "first" and "second" are only for purpose of description, and cannot be construed to indicate or imply the relative importance or implicitly point out the quantity of technical features indicated. Therefore, the feature defined with "first" or "second" may explicitly or implicitly include one or more features. In the description of the embodiments of the present disclosure, "multiple" means two or more, unless otherwise specified.

The above descriptions are only exemplary embodiments of the present disclosure and not intended to limit the present disclosure. Any modifications, equivalent replacements, improvements and others made within the principle of the present disclosure shall be contained in the protection scope of the present disclosure, as specified by the appended claims.

**Claims**

1. A computer-implemented training method for a fault detection model, comprising:

sampling (S101) a designated device, by collecting images of the device, based on a preset drone formation to obtain a sample sequence of images;

performing (S102) position encoding on the sample sequence according to the drone formation to obtain a drone formation encoding result;

inputting (S103) the sample sequence and the drone formation encoding result into a model to be trained to obtain a fault detection result output by the model to be trained;

determining (S104) a loss value based on the fault detection result and a true value of a fault detection result of the sample sequence; and

adjusting (S105) a model parameter of the model to be trained based on the loss value to obtain the fault detection model;

wherein the model to be trained comprises an encoder and a decoder;

the encoder is configured to perform feature extraction on each sample image in the sample sequence to obtain a multi-scale feature of each sample image; perform feature fusion on features in a same scale of the sample sequence based on the drone formation encoding result to obtain a fused feature corresponding to each scale; and perform feature fusion on fused features in all scales to obtain a target feature; and

the decoder is configured to determine a fault detection result of the designated device based on the target feature, wherein the fault detection result comprises a fault prediction type and a fault prediction box of a same fault position in a fault sample map; and splice sample images in the sample sequence with reference to the drone formation to obtain the fault sample map.

2. The method of claim 1, further comprising: determining the true value of the fault detection result of the sample sequence by:

splicing the sample sequence into the fault sample map according to the drone formation, wherein the fault sample map describes a state of the designated device from a plurality of drone perspectives;

constructing first prompt information based on the fault sample map, wherein the first prompt information comprises a fault point of at least one fault in the fault sample map, and position information of detection boxes of a same fault in different drone perspectives in the fault sample map is used as sub-position parameters;

performing position encoding on the sub-position parameters of the same fault to obtain a fault position code of the same fault; and

for each fault, performing following operations:

inputting a fault point of the fault and a fault position code of the fault as second prompt information into an everything segmentation model, so that the everything segmentation model segments out a fault mask map of the fault from the fault sample map; and

obtaining a true class label of the fault mask map of the fault, and constructing a detection box label of the fault based on position information of the fault mask map in the fault sample map, to obtain the true value of the fault detection result.

3. The method of claim 1 or 2, wherein a loss function of the model to be trained comprises following loss items:

position loss between the fault prediction box and detection box label; and
classification loss between the fault prediction type and true class label.

4. The method of claim 3, wherein the classification loss is determined based on a following formula:

$$l_{cls} = -\frac{1}{N}\sum_{i}^{N} log\left(\frac{e^{f(a_i,b_i)/\rho_\tau}}{\sum_{b'} e^{f(a_i,b')/\rho_\tau}}\right)$$

wherein N is a quantity of fault positions in the fault sample map, and a same fault position is counted once in N when there are a plurality of sample images describing the same fault position in the fault sample map;

$a_i$ is an i-th fault position;

$f(a_i, b_i)$ is a true class label of the i-th fault position;

$f(a_i, b')$ is statistic of a prediction score of each sample image for the i-th fault position when the i-th fault position appears in a plurality of sample images of the fault sample map; and

$\rho_\tau$ is a temperature scalar.

5. The method of claim 4, wherein the statistic is a mean value, a mode or a maximum value.

6. The method of claim 3, wherein the position loss comprises:

a first position loss sub-item, used to represent loss between fault prediction boxes of the same fault position in a plurality of sample images in the sample sequence and center points of corresponding detection box labels;

a second position loss sub-item, used to represent detection box width loss between the fault prediction boxes of the same fault position in the plurality of sample images and the corresponding detection box labels, and detection box height loss between the fault prediction boxes of the same fault position in the plurality of sample images and the corresponding detection box labels;

a third position loss sub-item, used to represent confidence loss of the fault prediction boxes of the same fault position in the plurality of sample images;

a fourth position loss sub-item, used to represent overlap rate loss between important fault prediction boxes of the same fault position in the plurality of sample images and detection boxes of important positions in corresponding detection box labels; and

a fifth position loss sub-item, used to represent quantity loss between a total quantity of fault prediction boxes of the same fault position in the plurality of sample images and a total quantity of detection boxes in the corresponding detection box labels.

7. A device fault detection method, applied to the fault detection model of any one of claims 1 to 6, comprising:

obtaining (S501) an initial image set of a target device based on a drone queue, wherein the drone queue is used to collect images of the target device from a plurality of perspectives to obtain the initial image set;

denoising (S502) each initial image in the initial image set to obtain a set of images to be detected;

performing (S503) position encoding on the drone queue to obtain a drone position encoding result; and

inputting (S504) the set of images to be detected and the drone position coding result into the fault detection model to obtain a fault detection result of the fault detection model for the target device;

wherein the fault detection result comprises a fault prediction type and a fault prediction box of a same fault position in a target map; and the target map is obtained by splicing the images to be detected in the set of images to be detected with reference to the drone queue;

wherein the method further comprises:

screening out at least one key prediction box from a plurality of fault prediction boxes of the same fault position;

separating out an image to be detected of each key prediction box from the target map based on the at least one key prediction box; and

constructing and outputting a three-dimensional effect graph of the same fault position based on the image to be detected of each key prediction box.

8. A training apparatus for (600) a fault detection model, comprising:

a sampling module (601) configured to sample a designated device, by collecting images of the device, based on a preset drone formation to obtain a sample sequence of images;

a first encoding module (602) configured to perform position encoding on the sample sequence according to the drone formation to obtain a drone formation encoding result;

an input module (603) configured to input the sample sequence and the drone formation encoding result into a model to be trained to obtain a fault detection result output by the model to be trained;

a determining module (604) configured to determine a loss value based on the fault detection result and a true value of a fault detection result of the sample sequence; and

an adjustment module (605) configured to adjust a model parameter of the model to be trained based on the loss value to obtain the fault detection model;

wherein the model to be trained comprises an encoder and a decoder;

the encoder is configured to perform feature extraction on each sample image in the sample sequence to obtain a multi-scale feature of each sample image; perform feature fusion on features in a same scale of the sample sequence based on the drone formation encoding result to obtain a fused feature corresponding to each scale; and perform feature fusion on fused features in all scales to obtain a target feature; and

the decoder is configured to determine a fault detection result of the designated device based on the target feature, wherein the fault detection result comprises a fault prediction type and a fault prediction box of a same fault position in a fault sample map; and splice sample images in the sample sequence with reference to the drone formation to obtain the fault sample map.

9.  The apparatus of claim 8, further comprising an obtaining module configured to:

splice the sample sequence into the fault sample map according to the drone formation, wherein the fault sample map describes a state of the designated device from a plurality of drone perspectives;

construct first prompt information based on the fault sample map, wherein the first prompt information comprises a fault point of at least one fault in the fault sample map, and position information of detection boxes of a same fault in different drone perspectives in the fault sample map is used as sub-position parameters;

perform position encoding on the sub-position parameters of the same fault to obtain a fault position code of the same fault; and

for each fault, perform following operations:

inputting a fault point of the fault and a fault position code of the fault as second prompt information into an everything segmentation model, so that the everything segmentation model segments out a fault mask map of the fault from the fault sample map; and

obtaining a true class label of the fault mask map of the fault, and construct a detection box label of the fault based on position information of the fault mask map in the fault sample map, to obtain the true value of the fault detection result.

10.  The apparatus of claim 8 or 9, wherein a loss function of the model to be trained comprises following loss items:

position loss between the fault prediction box and detection box label; and
classification loss between the fault prediction type and true class label.

11.  The apparatus of claim 10, wherein the determining module is configured to determine the classification loss based on a following formula:

$$l_{cls} = -\frac{1}{N} \sum_{i}^{N} log \left( \frac{e^{f(a_i, b_i)/\rho_\tau}}{\sum_{b'} e^{f(a_i, b')/\rho_\tau}} \right)$$

wherein N is a quantity of fault positions in the fault sample map, and a same fault position is counted once in N when there are a plurality of sample images describing the same fault position in the fault sample map;

$a_i$ is an i-th fault position;
$f(a_i, b_i)$ is a true class label of the i-th fault position;
$f(a_i, b')$ is statistic of a prediction score of each sample image for the i-th fault position when the i-th fault position appears in a plurality of sample images of the fault sample map; and
$\rho_\tau$ is a temperature scalar.

12.  The apparatus of claim 11, wherein the statistic is a mean value, a mode or a maximum value.

13.  The apparatus of claim 10, wherein the position loss comprises:

a first position loss sub-item, used to represent loss between fault prediction boxes of the same fault position in a plurality of sample images in the sample sequence and center points of corresponding detection box labels;

a second position loss sub-item, used to represent detection box width loss between the fault prediction boxes of the same fault position in the plurality of sample images and the corresponding detection box labels, and detection box height loss between the fault prediction boxes of the same fault position in the plurality of sample images and the corresponding detection box labels;

a third position loss sub-item, used to represent confidence loss of the fault prediction boxes of the same fault position in the plurality of sample images;

a fourth position loss sub-item, used to represent overlap rate loss between important fault prediction boxes of the same fault position in the plurality of sample images and detection boxes of important positions in corresponding detection box labels; and

a fifth position loss sub-item, used to represent quantity loss between a total quantity of fault prediction boxes of the same fault position in the plurality of sample images and a total quantity of detection boxes in the corresponding detection box labels.

14. A device fault detection apparatus (700), applied to the fault detection model of any one of claims 8 to 13, comprising:

a collecting module (701) configured to obtain an initial image set of a target device based on a drone queue, wherein the drone queue is used to collect images of the target device from a plurality of perspectives to obtain the initial image set;

a denoising module (702) configured to denoise each initial image in the initial image set to obtain a set of images to be detected;

a second encoding module (703) configured to perform position encoding on the drone queue to obtain a drone position encoding result; and

a processing module (704) configured to input the set of images to be detected and the drone position coding result into the fault detection model to obtain a fault detection result of the fault detection model for the target device;

wherein the fault detection result comprises a fault prediction type and a fault prediction box of a same fault position in a target map; and the target map is obtained by splicing the images to be detected in the set of images to be detected with reference to the drone queue;

wherein the apparatus further comprises a generating module configured to:

screen out at least one key prediction box from a plurality of fault prediction boxes of the same fault position;

separate out an image to be detected of each key prediction box from the target map based on the at least one key prediction box; and

construct and output a three-dimensional effect graph of the same fault position based on the image to be detected of each key prediction box.

15. A non-transitory computer-readable storage medium storing computer instructions thereon, wherein the computer instructions cause a computer to execute the method of any one of claims 1 to 7.

**Patentansprüche**

1. Computerimplementiertes Trainingsverfahren für ein Fehlererkennungsmodell, umfassend:

Abtasten (S101) einer bezeichneten Vorrichtung, indem Bilder der Vorrichtung gesammelt werden, basierend auf voreingestellter Drohnenformation, um eine Abtastsequenz zu erlangen;

Durchführen (S102) von Positionscodierung an der Abtastsequenz gemäß der Drohnenformation, um ein Drohnenformation-Kodierungsresultat zu erlangen;

Eingeben (S103) der Abtastabfolge und des Drohnenformationskodierungsresultat in ein zu trainierendes Modell, um ein Fehlererkennungsresultat zu erlangen, das von dem zu trainierenden Modell ausgegeben wird;

Bestimmen (S104) eines Verlustwerts basierend auf dem Fehlererkennungsresultat und einem wahren Wert eines Fehlererkennungsresultats der Abtastabfolge; und

Einstellen (S105) eines Modellparameters des zu trainierenden Modells basierend auf dem Verlustwert, um das Fehlererkennungsmodell zu erlangen;

wobei das zu trainierende Modell einen Kodierer und einen Dekodierer umfasst;

der Codierer konfiguriert ist, um eine Merkmalsextraktion an jedem Abtastbild in der Abtastabfolge durchzuführen, um ein Mehrskalenmerkmal von jedem Abtastbild zu erlangen; eine Merkmalsverschmelzung an Merkmalen in einer gleichen Skala der Abtastabfolge basierend auf dem Drohnenformation-Kodierungsresultat durchzuführen, um ein verschmolzenes Merkmal zu erlangen, das jeder Skala entspricht; und eine Merkmalsverschmelzung an verschmolzenen Merkmalen in allen Skalen durchzuführen, um ein Zielmerkmal zu erlangen;

und

der Dekodierer konfiguriert ist, um ein Fehlererkennungsresultat der bezeichneten Vorrichtung basierend auf dem Zielmerkmal zu bestimmen, wobei das Fehlererkennungsresultat einen Fehlervorhersagetyp und ein Fehlervorhersagefeld einer gleichen Fehlerposition in einer Fehlerabtastkarte umfasst; und Abtastbilder in der Abtastsequenz unter Bezugnahme auf die Drohnenformation zusammenzusetzen, um die Fehlerabtastkarte zu erlangen.

2. Verfahren nach Anspruch 1, ferner umfassend: Bestimmen des wahren Werts des Fehlererkennungsresultats der Abtastabfolge durch:

Zusammensetzen der Abtastabfolge in die Fehlerabtastkarte entsprechend der Drohnenformation, wobei die Fehlerabtastkarte einen Zustand der bezeichneten Vorrichtung aus einer Vielzahl von Drohnenperspektiven beschreibt;

Konstruieren erster Aufforderungsinformationen basierend auf der Fehlerabtastkarte, wobei die ersten Aufforderungsinformationen einen Fehlerpunkt mindestens eines Fehlers in der Fehlerabtastkarte umfassen und Positionsinformationen von Erfassungsfeldern desselben Fehlers in verschiedenen Drohnenperspektiven in der Fehlerabtastkarte als Unterpositionsparameter verwendet werden;

Durchführen von Positionskodierung an den Unterpositionsparametern desselben Fehlers, um einen Fehlerpositionscode desselben Fehlers zu erlangen; und

für jeden Fehler, Durchführen folgender Vorgänge:

Eingeben eines Fehlerpunkts des Fehlers und eines Fehlerpositionscodes des Fehlers als zweite Eingabeaufforderungsinformationen in ein Alles-Segmentierungsmodell, sodass das Alles-Segmentierungsmodell eine Fehlermaskenkarte des Fehlers aus der Fehlerabtastkarte segmentiert; und

Erlangen eines wahren Klassenlabels der Fehlermaskenkarte des Fehlers, und Konstruieren eines Erkennungsfeldlabels des Fehlers basierend auf Positionsinformationen der Fehlermaskenkarte in der Fehlerabtastkarte, um den wahren Wert des Fehlererkennungsresultats zu erlangen.

3. Verfahren nach Anspruch 1 oder 2, wobei eine Verlustfunktion des zu trainierenden Modells die folgenden Verlustelemente umfasst:

Positionsverlust zwischen dem Fehlervorhersagefeld und dem Erkennungsfeldlabel; und

Klassifizierungsverlust zwischen der Fehlervorhersagetyp und dem wahren Klassenlabel.

4. Verfahren nach Anspruch 3, wobei der Klassifikationsverlust basierend auf der folgenden Formel bestimmt wird:

$$l_{cls} = -\frac{1}{N} \sum_{i}^{N} log\left(\frac{e^{f(a_i, b_i)/\rho_\tau}}{\sum_{b'} e^{f(a_i, b')/\rho_\tau}}\right)$$

wobei N eine Anzahl von Fehlerpositionen in der Fehlerabtastkarte ist, und eine gleiche Fehlerposition einmal in N gezählt wird, wenn es eine Vielzahl von Abtastbildern gibt, die die gleiche Fehlerposition in der Fehlerabtastkarte beschreiben;

$a_i$ die i-te Fehlerposition ist;

$f(a_i, b_i)$ ein wahres Klassenlabel für die i-te Fehlerposition ist;

$f(a_i, b')$ eine Statistik einer Vorhersagebewertung jedes Abtastbilds für die i-te Fehlerposition ist, wenn die i-te Fehlerposition in einer Vielzahl von Abtastbildern der Fehlerabtastkarte erscheint; und

$\rho_\tau$ ein Temperaturskalar ist.

5. Verfahren nach Anspruch 4, wobei die Statistik ein Mittelwert, ein Modus oder ein Maximalwert ist.

6. Verfahren nach Anspruch 3, wobei der Positionsverlust Folgendes umfasst:

einen ersten Positionsverlust-Unterpunkt, der verwendet wird, um einen Verlust zwischen Fehlervorhersagefeldern derselben Fehlerposition in einer Vielzahl von Abtastbildern in der Abtastabfolge und den Mittelpunkten der entsprechenden Erkennungsfeldlabels darzustellen;

einen zweiten Positionsverlust-Unterpunkt, der verwendet wird, um einen Erkennungsfeld-Breitenverlust zwischen den Fehlervorhersagefeldern der gleichen Fehlerposition in der Vielzahl von Abtastbildern und den entsprechenden Erkennungsfeldlabels darzustellen, und einen Erkennungsfeld-Höhenverlust zwischen den Fehlervorhersagefeldern der gleichen Fehlerposition in der Vielzahl von Abtastbildern und den entsprechenden Erkennungsfeldlabels;

einen dritten Positionsverlust-Unterpunkt, der verwendet wird, um einen Vertrauensverlust der Fehlervorhersagefelder der gleichen Fehlerposition in der Vielzahl von Abtastbildern darzustellen;

einen vierten Positionsverlust-Unterpunkt, der verwendet wird, um einen Verlust der Überlappungsratenverlust zwischen wichtigen Fehlervorhersagefeldern derselben Fehlerposition in der Vielzahl von Abtastbildern und Erkennungsfeldern wichtiger Positionen in entsprechenden Erkennungsfeldlabels darzustellen; und

einen fünften Positionsverlust-Unterpunkt, der verwendet wird, um einen Anzahlverlust zwischen einer Gesamtmenge von Fehlervorhersagefeldern derselben Fehlerposition in der Vielzahl von Abtastbildern und einer Gesamtmenge von Erkennungsfeldern in den entsprechenden Erkennungsfeldlabels darzustellen.

7. Vorrichtungsfehler-Erkennungsverfahren, angewandt auf das Fehlererkennungsmodell nach einem der Ansprüche 1 bis 6, umfassend:

Erlangen (S501) eines anfänglichen Bildsatzes einer Zielvorrichtung basierend auf einer Drohnen-Warteschlange, wobei die Drohnen-Warteschlange verwendet wird, um Bilder der Zielvorrichtung aus einer Vielzahl von Perspektiven zu sammeln, um den anfänglichen Bildsatz zu erlangen;

Rauschunterdrückung (S502) von jedem anfänglichen Bild in dem anfänglichen Bildsatz, um einen Satz von zu erkennenden Bildern zu erlangen;

Durchführen (S503) von Positionskodierung an der Drohnen-Warteschlange, um ein Drohnenpositionskodierungsresultat zu erlangen; und

Eingeben (S504) des Satzes von zu erfassenden Bilder und des Drohnenpositionskodierungsresultats in das Fehlererkennungsmodell, um ein Fehlererkennungsresultat des Fehlererkennungsmodells für die Zielvorrichtung zu erlangen;

wobei das Fehlererkennungsresultat einen Fehlervorhersagetyp und ein Fehlervorhersagefeld einer gleichen Fehlerposition in einer Zielkarte umfasst; und die Zielkarte durch Zusammensetzen der zu erkennenden Bilder in der Menge der zu erkennenden Bilder unter Bezugnahme auf die Drohnenwarteschlange erlangt wird;

wobei das Verfahren ferner Folgendes umfasst:

Herausfiltern mindestens eines Schlüsselvorhersagefelds aus einer Vielzahl von Fehlervorhersagefeldern derselben Fehlerposition;

Herauslösen eines zu erfassenden Bilds jedes Schlüsselvorhersagefelds aus der Zielkarte basierend auf dem mindestens einen Schlüsselvorhersagefeld; und

Erstellen und Ausgeben eines dreidimensionalen Effektgraphen der gleichen Fehlerposition basierend auf dem zu erfassenden Bild jedes Schlüsselvorhersagefelds.

8. Trainingsvorrichtung (600) für ein Fehlererkennungsmodell, umfassend:

ein Abtastmodul (601), das konfiguriert ist, um eine bezeichnete Vorrichtung abzutasten, indem es Bilder der Vorrichtung basierend auf einer voreingestellten Drohnenformation sammelt, um eine Abtastabfolge von Bildern zu erlangen;

ein erstes Kodiermodul (602), das konfiguriert ist, um eine Positionskodierung an der Abtastsequenz entsprechend der Drohnenformation durchzuführen, um ein Drohnenformationskodierresultat zu erlangen;

ein Eingabemodul (603), das konfiguriert ist, um die Abtastabfolge und das Drohnenformationskodierungsresultat in ein zu trainierendes Modell einzugeben, um ein Fehlererkennungsresultat zu erlangen, das von dem zu trainierenden Modell ausgegeben wird;

ein Bestimmungsmodul (604), das konfiguriert ist, um einen Verlustwert basierend auf dem Fehlererkennungsresultat und eines wahren Werts einem Fehlererkennungsresultat der Abtastabfolge zu bestimmen; und

ein Anpassungsmodul (605), das konfiguriert ist, um einen Modellparameter des zu trainierenden Modells basierend auf dem Verlustwert anzupassen, um das Fehlererkennungsmodell zu erlangen;

wobei das zu trainierende Modell einen Kodierer und einen Dekodierer umfasst;

der Codierer konfiguriert ist, um eine Merkmalsextraktion an jedem Abtastbild in der Abtastabfolge durchzuführen, um ein Mehrskalenmerkmal von jedem Abtastbild zu erlangen; eine Merkmalsverschmelzung an Merkmalen in einer gleichen Skala der Abtastabfolge basierend auf dem Drohnenformation-Kodierungsresultat durchzuführen, um ein verschmolzenes Merkmal zu erlangen, das jeder Skala entspricht; und eine Merkmalsverschmelzung an verschmolzenen Merkmalen in allen Skalen durchzuführen, um ein Zielmerkmal zu erlangen; und

der Dekodierer konfiguriert ist, um ein Fehlererkennungsresultat der bezeichneten Vorrichtung basierend auf dem Zielmerkmal zu bestimmen, wobei das Fehlererkennungsresultat einen Fehlervorhersagetyp und ein Fehlervorhersagefeld einer gleichen Fehlerposition in einer Fehlerabtastkarte umfasst; und Abtastbilder in der Abtastsequenz unter Bezugnahme auf die Drohnenformation zusammenzusetzen, um die Fehlerabtastkarte zu erlangen.

9. Vorrichtung nach Anspruch 8, ferner umfassend ein Erlangungsmodul, das zu Folgendem konfiguriert ist:

Zusammensetzen der Abtastabfolge in die Fehlerabtastkarte entsprechend der Drohnenformation, wobei die Fehlerabtastkarte einen Zustand der bezeichneten Vorrichtung aus einer Vielzahl von Drohnenperspektiven beschreibt;

Konstruieren erster Aufforderungsinformationen basierend auf der Fehlerabtastkarte, wobei die ersten Aufforderungsinformationen einen Fehlerpunkt mindestens eines Fehlers in der Fehlerabtastkarte umfassen und Positionsinformationen von Erfassungsfeldern desselben Fehlers in verschiedenen Drohnenperspektiven in der Fehlerabtastkarte als Unterpositionsparameter verwendet werden;

Durchführen von Positionskodierung an den Unterpositionsparametern desselben Fehlers, um einen Fehlerpositionscode desselben Fehlers zu erlangen; und

für jeden Fehler, Durchführen folgender Vorgänge:

Eingeben eines Fehlerpunkts des Fehlers und eines Fehlerpositionscodes des Fehlers als zweite Eingabeaufforderungsinformationen in ein Alles-Segmentierungsmodell, sodass das Alles-Segmentierungsmodell eine Fehlermaskenkarte des Fehlers anhand der Fehlerabtastkarte segmentiert; und

Erlangen eines wahren Klassenlabels der Fehlermaskenkarte des Fehlers, und Konstruieren eines Erkennungsfeldlabels des Fehlers basierend auf Positionsinformationen der Fehlermaskenkarte in der Fehlerabtastkarte, um den wahren Wert des Fehlererkennungsresultats zu erlangen.

10. Vorrichtung nach Anspruch 8 oder 9, wobei eine Verlustfunktion des zu trainierenden Modells die folgenden Verlustelemente umfasst:

Positionsverlust zwischen dem Fehlervorhersagefeld- und Erkennungsfeldlabel; und
Klassifizierungsverlust zwischen der Fehlervorhersagetyp und dem wahren Klassenlabel.

11. Vorrichtung nach Anspruch 10, wobei das Bestimmungsmodul konfiguriert ist, um den Klassifizierungsverlust basierend auf einer folgenden Formel bestimmt:

$$l_{cls} = -\frac{1}{N}\sum_{i}^{N} log\left(\frac{e^{f(a_i,b_i)/\rho_\tau}}{\sum_{b'} e^{f(a_i,b')/\rho_\tau}}\right)$$

wobei N eine Anzahl von Fehlerpositionen in der Fehlerabtastkarte ist, und eine gleiche Fehlerposition einmal in N gezählt wird, wenn es eine Vielzahl von Abtastbildern gibt, die die gleiche Fehlerposition in der Fehlerabtastkarte beschreiben;

$a_i$ die i-te Fehlerposition ist;
$f(a_i, b_i)$ ein wahres Klassenlabel für die i-te Fehlerposition ist;
$f(a_i, b')$ eine Statistik einer Vorhersagebewertung jedes Abtastbilds für die i-te Fehlerposition ist, wenn die i-te Fehlerposition in einer Vielzahl von Abtastbildern der Fehlerabtastkarte erscheint; und
$\rho_\tau$ ein Temperaturskalar ist.

12. Vorrichtung nach Anspruch 11, wobei die Statistik ein Mittelwert, ein Modus oder ein Maximalwert ist.

13. Vorrichtung nach Anspruch 10, wobei der Positionsverlust Folgendes umfasst:

einen ersten Positionsverlust-Unterpunkt, der verwendet wird, um einen Verlust zwischen Fehlervorhersagefeldern derselben Fehlerposition in einer Vielzahl von Abtastbildern in der Abtastabfolge und den Mittelpunkten der entsprechenden Erkennungsfeldlabels darzustellen;

einen zweiten Positionsverlust-Unterpunkt, der verwendet wird, um einen Erkennungsfeld-Breitenverlust zwischen den Fehlervorhersagefeldern der gleichen Fehlerposition in der Vielzahl von Abtastbildern und den entsprechenden Erkennungsfeldlabels darzustellen, und einen Erkennungsfeld-Höhenverlust zwischen den Fehlervorhersagefeldern der gleichen Fehlerposition in der Vielzahl von Abtastbildern und den entsprechenden Erkennungsfeldlabels;

einen dritten Positionsverlust-Unterpunkt, der verwendet wird, um einen Vertrauensverlust der Fehlervorhersagefelder der gleichen Fehlerposition in der Vielzahl von Abtastbildern darzustellen;

einen vierten Positionsverlust-Unterpunkt, der verwendet wird, um einen Verlust der Überlappungsratenverlust zwischen wichtigen Fehlervorhersagefeldern derselben Fehlerposition in der Vielzahl von Abtastbildern und Erkennungsfeldern wichtiger Positionen in entsprechenden Erkennungsfeldlabels darzustellen; und

einen fünften Positionsverlust-Unterpunkt, der verwendet wird, um einen Anzahlverlust zwischen einer Gesamtanzahl von Fehlervorhersagefeldern derselben Fehlerposition in der Vielzahl von Abtastbildern und einer Gesamtanzahl von Erkennungsfeldern in den entsprechenden Erkennungsfeldlabels darzustellen.

14. Vorrichtungsfehler-Erkennungsvorrichtung (700), angewandt auf das Fehlererkennungsmodell nach einem der Ansprüche 8 bis 13, umfassend:

ein Sammelmodul (701), das konfiguriert ist, um einen anfänglichen Bildsatz einer Zielvorrichtung basierend auf einer Drohnen-Warteschlange zu erlangen, wobei die Drohnen-Warteschlange verwendet wird, um Bilder der Zielvorrichtung aus einer Vielzahl von Perspektiven zu sammeln, um den anfänglichen Bildsatz zu erlangen;

ein Rauschunterdrückungsmodul (702), das konfiguriert ist, um jedes Ausgangsbild im Ausgangsbildsatz zu entrauschen, um einen Satz von zu erfassenden Bildern zu erlangen;

ein zweites Kodiermodul (703), das konfiguriert ist, um eine Positionskodierung an der Drohnen-Warteschlange durchzuführen, um ein Drohnenpositionskodierungsresultat zu erlangen; und

ein Verarbeitungsmodul (704), das konfiguriert ist, um den Satz der zu erfassenden Bilder und das Drohnenpositionskodierungsresultat in das Fehlererkennungsmodell einzugeben, um ein Fehlererkennungsresultat des Fehlererkennungsmodells für die Zielvorrichtung zu erlangen;

wobei das Fehlererkennungsresultat einen Fehlervorhersagetyp und ein Fehlervorhersagefeld einer gleichen Fehlerposition in einer Zielkarte umfasst; und die Zielkarte durch Zusammensetzen der zu erkennenden Bilder in der Menge der zu erkennenden Bilder unter Bezugnahme auf die Drohnenwarteschlange erlangt wird;

wobei die Vorrichtung ferner ein Erzeugungsmodul umfasst, das zu Folgendem konfiguriert ist:

Herausfiltern mindestens eines Schlüsselvorhersagefelds aus einer Vielzahl von Fehlervorhersagefeldern der gleichen Fehlerposition;

Trennen eines zu erfassenden Bildes jedes Schlüsselvorhersagefelds von der Zielkarte basierend auf dem mindestens einen Schlüsselvorhersagefeld; und

Erstellen und Ausgeben eines dreidimensionalen Effektgraphen derselben Fehlerposition basierend auf dem zu erfassenden Bild jedes Schlüsselvorhersagefelds.

15. Nicht-flüchtiges computerlesbares Speichermedium, das Computeranweisungen darauf speichert, wobei die Computeranweisungen einen Computer veranlassen, das Verfahren nach einem der Ansprüche 1 bis 7 durchzuführen.

## Revendications

1. Procédé d'apprentissage mis en œuvre par ordinateur pour un modèle de détection de défauts, comprenant :

l'échantillonnage (S101) d'un dispositif désigné, en collectant des images du dispositif, sur la base d'une formation de drones prédéfinie pour obtenir une séquence d'échantillons d'images ;

la réalisation (S102) d'un codage de position sur la séquence d'échantillons en fonction de la formation de drones afin d'obtenir un résultat de codage de formation de drones ;

l'entrée (S103) de la séquence d'échantillons et du résultat de codage de formation de drones dans un modèle à entraîner afin d'obtenir un résultat de détection de défauts fourni par le modèle à entraîner ;

la détermination (S104) d'une valeur de perte fondée sur le résultat de détection de défauts et d'une valeur vraie d'un résultat de détection de défauts de la séquence d'échantillons ; et

l'ajustement (S105) d'un paramètre de modèle du modèle à entraîner sur la base de la valeur de perte pour obtenir le modèle de détection de défauts ;

dans lequel le modèle à entraîner comprend un codeur et un décodeur ;

le codeur est configuré pour effectuer une extraction de caractéristiques sur chaque image échantillon de la séquence d'échantillons afin d'obtenir une caractéristique multi-échelle de chaque image échantillon ; effectuer une fusion de caractéristiques sur des caractéristiques dans une même échelle de la séquence d'échantillons sur la base du résultat de codage de formation de drones afin d'obtenir une caractéristique fusionnée correspondant à chaque échelle ; et effectuer une fusion de caractéristiques sur des caractéristiques fusionnées dans toutes les échelles afin d'obtenir une caractéristique cible ; et

le décodeur est configuré pour déterminer un résultat de détection de défauts du dispositif désigné sur la base de la caractéristique cible, dans lequel le résultat de détection de défauts comprend un type de prédiction de défaut et une boîte de prédiction de défaut d'une même position de défaut dans une carte d'échantillons de défauts ; et assembler des images échantillons dans la séquence d'échantillons en référence à la formation de drones pour obtenir la carte d'échantillons de défauts.

2. Procédé selon la revendication 1, comprenant en outre : la détermination de la valeur vraie du résultat de détection de défauts de la séquence d'échantillons par :

l'assemblage de la séquence d'échantillons dans la carte d'échantillons de défauts en fonction de la formation de drones, dans lequel la carte d'échantillons de défauts décrit un état de l'appareil désigné à partir d'une pluralité de perspectives de drone ;

la construction de premières informations d'invite sur la base de la carte d'échantillons de défauts, dans lequel les premières informations d'invite comprennent un point de défaut d'au moins un défaut dans la carte d'échantillons de défauts, et les informations de position des boîtes de détection d'un même défaut dans différentes perspectives de drone dans la carte d'échantillons de défauts sont utilisées comme paramètres de sous-position ;

la réalisation d'un codage de position sur les paramètres de sous-position du même défaut pour obtenir un code de position de défaut du même défaut ; et

pour chaque défaut, la réalisation des opérations suivantes :

l'entrée d'un point de défaut et d'un code de position de défaut en tant que secondes informations d'invite dans un modèle de segmentation globale, de sorte que le modèle de segmentation globale segmente une carte de masque de défauts du défaut à partir de la carte d'échantillons de défauts ; et

l'obtention d'une étiquette de classe vraie de la carte de masque de défauts du défaut, et la construction d'une étiquette de boîte de détection du défaut sur la base d'informations de position de la carte de masque de défauts dans la carte d'échantillons de défauts, afin d'obtenir la valeur vraie du résultat de détection de défauts.

3. Procédé selon la revendication 1 ou 2, dans lequel une fonction de perte du modèle à entraîner comprend les éléments de perte suivants :

la perte de position entre l'étiquette de boîte de prédiction de défaut et celle de la boîte de détection ; et

la perte de classification entre le type de prédiction de défaut et l'étiquette de classe vraie.

4. Procédé selon la revendication 3, dans lequel la perte de classification est déterminée sur la base de la formule suivante :

$$l_{cls} = -\frac{1}{N} \sum_{i}^{N} log \left( \frac{e^{f(a_i, b_i)/\rho_\tau}}{\sum_{b'} e^{f(a_i, b')/\rho_\tau}} \right)$$

où N est une quantité de positions de défaut dans la carte d'échantillons de défauts, et une même position de défaut est comptée une fois dans N lorsqu'il existe une pluralité d'images échantillons décrivant la même position de défaut dans la carte d'échantillons de défauts ;

$a_i$ est la i-ième position de défaut ;

$f(a_i, b_i)$ est une étiquette de classe vraie de la i-ième position de défaut ;

$f(a_i, b')$ est la statistique d'un score de prédiction de chaque image échantillon pour la i-ième position de défaut lorsque la i-ième position de défaut apparaît dans une pluralité d'images échantillons de la carte d'échantillons de défauts ; et

$\rho_\tau$ est un scalaire de température.

5. Procédé selon la revendication 4, dans lequel la statistique est une valeur moyenne, un mode ou une valeur maximale.

6. Procédé selon la revendication 3, dans lequel la perte de position comprend :

un premier sous-élément de perte de position, utilisé pour représenter la perte entre les boîtes de prédiction de défaut de la même position de défaut dans une pluralité d'images échantillons de la séquence d'échantillons et les points centraux des étiquettes de boîtes de détection correspondantes ;

un deuxième sous-élément de perte de position, utilisé pour représenter la perte de largeur de boîte de détection entre les boîtes de prédiction de défaut de la même position de défaut dans la pluralité d'images échantillons et les étiquettes de boîte de détection correspondantes, et la perte de hauteur de boîte de détection entre les boîtes de prédiction de défaut de la même position de défaut dans la pluralité d'images échantillons et les étiquettes de boîte de détection correspondantes ;

un troisième sous-élément de perte de position, utilisé pour représenter la perte de confiance des boîtes de prédiction de défaut de la même position de défaut dans la pluralité d'images échantillons ;

un quatrième sous-élément de perte de position, utilisé pour représenter la perte de taux de chevauchement entre les boîtes de prédiction de défaut important de la même position de défaut dans la pluralité d'images échantillons et les boîtes de détection de positions importantes dans les étiquettes de boîtes de détection correspondantes ; et

un cinquième sous-élément de perte de position, utilisé pour représenter la perte de quantité entre une quantité totale de boîtes de prédiction de défaut de la même position de défaut dans la pluralité d'images échantillons et une quantité totale de boîtes de détection dans les étiquettes de boîtes de détection correspondantes.

7. Procédé de détection de défauts d'un dispositif, appliqué au modèle de détection de défauts selon l'une quelconque des revendications 1 à 6, comprenant :

l'obtention (S501) d'un ensemble d'images initiales d'un dispositif cible sur la base d'une file d'attente de drones, dans lequel la file d'attente de drones est utilisée pour collecter des images du dispositif cible à partir d'une pluralité de perspectives afin d'obtenir l'ensemble d'images initiales ;

le débruitage (S502) de chaque image initiale de l'ensemble d'images initiales pour obtenir un ensemble d'images à détecter ;

la réalisation (S503) d'un codage de position sur la file d'attente de drones pour obtenir un résultat de codage de position de drone ; et

l'entrée (S504) de l'ensemble d'images à détecter et du résultat de codage de position de drone dans le modèle de détection de défauts afin d'obtenir un résultat de détection de défauts du modèle de détection de défauts pour le dispositif cible ;

dans lequel le résultat de détection de défauts comprend un type de prédiction de défaut et une boîte de prédiction de défaut d'une même position de défaut dans une carte cible ; et la carte cible est obtenue en assemblant les images à détecter dans l'ensemble d'images à détecter en référence à la file d'attente de drones ;

dans lequel le procédé comprend en outre :

l'élimination d'au moins une boîte de prédiction clé à partir d'une pluralité de boîtes de prédiction de défauts de la même position de défaut ;

la séparation d'une image à détecter de chaque boîte de prédiction clé de la carte cible sur la base de l'au moins une boîte de prédiction clé ; et

la construction et la production d'un graphique d'effet tridimensionnel de la même position de défaut sur la base de l'image à détecter de chaque boîte de prédiction clé.

8. Appareil d'apprentissage (600) un modèle de détection de défauts, comprenant :

un module d'échantillonnage (601) configuré pour échantillonner un dispositif désigné, en collectant des images du dispositif, sur la base d'une formation de drones prédéfinie pour obtenir une séquence d'échantillons d'images ;

un premier module de codage (602) configuré pour effectuer un codage de position sur la séquence d'échantillons en fonction de la formation de drones afin d'obtenir un résultat de codage de formation de drones ;

un module d'entrée (603) configuré pour entrer la séquence d'échantillons et le résultat de codage de formation de drones dans un modèle à entraîner afin d'obtenir un résultat de détection de défauts fourni par le modèle à entraîner ;

un module de détermination (604) configuré pour déterminer une valeur de perte sur la base du résultat de détection de défauts et d'une valeur vraie d'un résultat de détection de défauts de la séquence d'échantillons ; et

un module d'ajustement (605) configuré pour ajuster un paramètre de modèle du modèle à entraîner sur la base de la valeur de perte afin d'obtenir le modèle de détection de défauts ;

dans lequel le modèle à entraîner comprend un codeur et un décodeur ;

le codeur est configuré pour effectuer une extraction de caractéristiques sur chaque image échantillon de la séquence d'échantillons afin d'obtenir une caractéristique multi-échelle de chaque image échantillon ; effectuer une fusion de caractéristiques sur des caractéristiques dans une même échelle de la séquence d'échantillons sur la base du résultat de codage de formation de drones afin d'obtenir une caractéristique fusionnée correspondant à chaque échelle ; et effectuer une fusion de caractéristiques sur des caractéristiques fusionnées dans toutes les échelles afin d'obtenir une caractéristique cible ; et

le décodeur est configuré pour déterminer un résultat de détection de défauts du dispositif désigné sur la base de la caractéristique cible, dans lequel le résultat de détection de défauts comprend un type de prédiction de défaut et une boîte de prédiction de défaut d'une même position de défaut dans une carte d'échantillons de défauts ; et assembler des images échantillons dans la séquence d'échantillons en référence à la formation de drones pour obtenir la carte d'échantillons de défauts.

9. Appareil selon la revendication 8, comprenant en outre un module d'obtention configuré pour :

assembler la séquence d'échantillons dans la carte d'échantillons de défauts en fonction de la formation de drones, dans lequel la carte d'échantillons de défauts décrit un état de l'appareil désigné à partir d'une pluralité de perspectives de drone ;

construire les premières informations d'invite sur la base de la carte d'échantillons de défauts, dans lequel les premières informations d'invite comprennent un point de défaut d'au moins un défaut dans la carte d'échantillons de défauts, et les informations de position des boîtes de détection d'un même défaut dans différentes perspectives de drone dans la carte d'échantillons de défauts sont utilisées comme paramètres de sous-position ;

réaliser un codage de position sur les paramètres de sous-position du même défaut pour obtenir un code de position de défaut du même défaut ; et

pour chaque défaut, réaliser les opérations suivantes :

l'entrée d'un point de défaut et d'un code de position de défaut en tant que secondes informations d'invite dans un modèle de segmentation globale, de sorte que le modèle de segmentation globale segmente une carte de masque de défauts du défaut à partir de la carte d'échantillons de défauts ; et

l'obtention d'une étiquette de classe vraie de la carte de masque de défauts du défaut, et la construction d'une étiquette de boîte de détection du défaut sur la base d'informations de position de la carte de masque de défauts dans la carte d'échantillons de défauts, afin d'obtenir la valeur vraie du résultat de détection de défauts.

10. Appareil selon la revendication 8 ou 9, dans lequel une fonction de perte du modèle à entraîner comprend les éléments de perte suivants :

la perte de position entre l'étiquette de boîte de prédiction de défaut et l'étiquette de la boîte de détection ; et

la perte de classification entre le type de prédiction de défaut et l'étiquette de classe vraie.

11. Appareil selon la revendication 10, dans lequel le module de détermination est configuré pour déterminer la perte de classification sur la base d'une formule suivante :

$$l_{cls} = -\frac{1}{N} \sum_{i}^{N} log \left( \frac{e^{f(a_i, b_i)/\rho_\tau}}{\sum_{b'} e^{f(a_i, b')/\rho_\tau}} \right)$$

où N est une quantité de positions de défaut dans la carte d'échantillons de défauts, et une même position de défaut est comptée une fois dans N lorsqu'il existe une pluralité d'images échantillons décrivant la même position de défaut dans la carte d'échantillons de défauts ;

$a_i$ est la i-ième position de défaut ;

$f(a_i, b_i)$ est une étiquette de classe vraie de la i-ième position de défaut ;

$f(a_i, b')$ est la statistique d'un score de prédiction de chaque image échantillon pour la i-ième position de défaut lorsque la i-ième position de défaut apparaît dans une pluralité d'images échantillons de la carte d'échantillons de défauts ; et

$\rho_\tau$ est un scalaire de température.

12. Appareil selon la revendication 11, dans lequel la statistique est une valeur moyenne, un mode ou une valeur maximale.

13. Appareil selon la revendication 10, dans lequel la perte de position comprend :

un premier sous-élément de perte de position, utilisé pour représenter la perte entre les boîtes de prédiction de défaut de la même position de défaut dans une pluralité d'images échantillons de la séquence d'échantillons et les points centraux des étiquettes de boîtes de détection correspondantes ;

un deuxième sous-élément de perte de position, utilisé pour représenter la perte de largeur de boîte de détection entre les boîtes de prédiction de défaut de la même position de défaut dans la pluralité d'images échantillons et les étiquettes de boîte de détection correspondantes, et la perte de hauteur de boîte de détection entre les boîtes de prédiction de défaut de la même position de défaut dans la pluralité d'images échantillons et les étiquettes de boîte de détection correspondantes ;

un troisième sous-élément de perte de position, utilisé pour représenter la perte de confiance des boîtes de prédiction de défaut de la même position de défaut dans la pluralité d'images échantillons ;

un quatrième sous-élément de perte de position, utilisé pour représenter la perte de taux de chevauchement entre les boîtes de prédiction de défaut important de la même position de défaut dans la pluralité d'images échantillons et les boîtes de détection de positions importantes dans les étiquettes de boîtes de détection correspondantes ; et

un cinquième sous-élément de perte de position, utilisé pour représenter la perte de quantité entre une quantité totale de boîtes de prédiction de défaut de la même position de défaut dans la pluralité d'images échantillons et une quantité totale de boîtes de détection dans les étiquettes de boîtes de détection correspondantes.

14. Appareil (700) de détection de défauts d'un dispositif, appliqué au modèle de détection de défauts selon l'une quelconque des revendications 8 à 13, comprenant :

un module de collecte (701) configuré pour obtenir un ensemble d'images initiales d'un dispositif cible sur la base d'une file d'attente de drones, dans lequel la file d'attente de drones est utilisée pour collecter des images du dispositif cible à partir d'une pluralité de perspectives afin d'obtenir l'ensemble d'images initiales ;

un module de débruitage (702) configuré pour débruiter chaque image initiale de l'ensemble d'images initiales pour obtenir un ensemble d'images à détecter ;

un second module de codage (703) configuré pour effectuer un codage de position sur la file d'attente de drones pour obtenir un résultat de codage de position de drone ; et

un module de traitement (704) configuré pour entrer l'ensemble d'images à détecter et du résultat de codage de position de drone dans le modèle de détection de défauts afin d'obtenir un résultat de détection de défauts du modèle de détection de défauts pour le dispositif cible ;

dans lequel le résultat de détection de défauts comprend un type de prédiction de défaut et une boîte de prédiction de défaut d'une même position de défaut dans une carte cible ; et la carte cible est obtenue en assemblant les images à détecter dans l'ensemble d'images à détecter en référence à la file d'attente de drones ;

dans lequel l'appareil comprend en outre un module de génération configuré pour :

éliminer au moins une boîte de prédiction clé d'une pluralité de boîtes de prédiction de défauts de la même position de défaut ;

séparer une image à détecter de chaque boîte de prédiction clé de la carte cible sur la base de l'au moins une boîte de prédiction clé ; et

construire et produire un graphique d'effet tridimensionnel de la même position de défaut sur la base de l'image à détecter de chaque boîte de prédiction clé.

15. Support de stockage non transitoire lisible par ordinateur stockant des instructions informatiques, dans lequel les instructions informatiques amènent un ordinateur à exécuter le procédé selon l'une quelconque des revendications 1 à 7.

S101

Sampling a designated device based on a preset drone formation to obtain a sample sequence, where the sample sequence is numbered according to the drone formation

S102

Performing position encoding on the sample sequence according to the drone formation to obtain a drone formation encoding result

S103

Inputting the sample sequence and the drone formation encoding result into a model to be trained to obtain a fault detection result output by the model to be trained

S104

Determining a loss value based on the fault detection result and a true value of a fault detection result of the sample sequence

S105

Adjusting a model parameter of the model to be trained based on the loss value to obtain the fault detection model, where the model to be trained includes an encoder and a decoder; the encoder is configured to perform feature extraction on each sample image in the sample sequence to obtain a multi-scale feature of each sample image; perform feature fusion on features in a same scale of the sample sequence based on the drone formation encoding result to obtain a fused feature corresponding to each scale; and perform feature fusion on fused features in all scales to obtain a target feature; and the decoder is configured to determine a fault detection result of the designated device based on the target feature, where the fault detection result includes a fault prediction type and a fault prediction box of a same fault position in a fault sample map; and splice sample images in the sample sequence with reference to the drone formation to obtain the fault sample map

FIG. 1

FIG. 2

f11 | f12 | ... | f1m

Image 1

f21 | f22 | ... | f2m

Image 2

...

fn1 | fn2 | ... | fnm

Image n

f11 | f21 | ... | fn1

Fully connected layer

First fused feature

Attention mechanism-based encoder ← Drone formation encoding result

First intermediate feature

f12 | f22 | ... | fn2

Fully connected layer

Second fused feature

Attention mechanism-based encoder ← Drone formation encoding result

Second intermediate feature

f1m | f2m | ... | fnm

Fully connected layer

m-th fused feature

Attention mechanism-based encoder ← Drone formation encoding result

m-th intermediate feature

Target feature

Model to be trained

Fault prediction result

FIG. 3

FIG. 4

S501

Obtaining an initial image set of a target device based on a drone queue, where the drone queue is used to collect images of the target device from a plurality of perspectives to obtain the initial image set

S502

Denoising each initial image in the initial image set to obtain a set of images to be detected

S503

Performing position encoding on the drone queue to obtain a drone position encoding result

S504

Inputting the set of images to be detected and the drone position coding result into the fault detection model to obtain a fault detection result of the fault detection model for the target device, where the fault detection result includes a fault prediction type and a fault prediction box of a same fault position in a target map; and the target map is obtained by splicing the images to be detected in the set of images to be detected with reference to the drone queue

FIG. 5

Training apparatus 600 for fault detection model

Sampling module 601

First encoding module 602

Input module 603

Determining module 604

Adjustment module 605

FIG. 6

Device fault detection apparatus 700

Collecting module 701

Denoising module 702

Second encoding module 703

Processing module 704

FIG. 7

FIG. 8